# DEMANDE DE BREVET EUROPEEN

(11) **EP 4 358 212 A1**
(43) Date de publication de la demande: **24.04.2024**
(21) Numéro de dépôt: 23203778.8
(22) Date de dépôt: 16.10.2023
(51) Int. Cl.: H01M 10/04, H01M 6/40, H01M 10/0562, H01M 4/525, H01M 4/04, H01M 4/02

(54) **PROCÉDÉ DE FABRICATION D'UNE MICROBATTERIE À ÉLECTROLYTE SOLIDE ET MICROBATTERIE CORRESPONDANTE**

(30) Priorité: 20.10.2022 FR 2210878
(71) Demandeur: Commissariat à l'énergie atomique et aux énergies alternatives, 75015 Paris (FR)
(72) Inventeur: COLONNA, Jean-Philippe, 38054 GRENOBLE CEDEX 09 (FR); OUKASSI, Sami, 38054 GRENOBLE CEDEX 09 (FR); BERT, Maud, 38054 GRENOBLE CEDEX 09 (FR); DECHAMP, Jérôme, 38054 GRENOBLE CEDEX 09 (FR)
(74) Mandataire: INNOV-GROUP

(57) **Abrégé**

Microbatterie à électrolyte solide, comportant :
- un substrat (S) ;
- une couche d'oxyde de lithium cobalt (2), formant une cathode présentant des première et seconde surfaces (20, 21) opposées ;
- un électrolyte solide (4), à base de lithium, formé sur la première surface (20) de la cathode (2) ; la seconde surface (21) de la cathode (2) étant orientée vers le substrat (S) ;
- une anode (5), formée sur l'électrolyte solide (4) ;
remarquable en ce que la couche d'oxyde de lithium cobalt (2) possède une taille de grain croissante de la première surface (20) vers la seconde surface (21).

## Description

### Domaine technique

L'invention se rapporte au domaine technique des microbatteries à électrolyte solide, l'électrolyte solide étant à base de lithium.

L'invention trouve notamment son application dans la microélectronique, l'internet des objets, les dispositifs implantables ou portables.

### État de l'art

Un procédé de fabrication d'une microbatterie à électrolyte solide connu de l'état de la technique, notamment du document US 2021/0359339 A1, comporte les étapes :
A) former une cathode en oxyde de lithium cobalt par une technique de dépôt de film ;
B) polir la surface de la cathode ;
C) réactiver la surface de la cathode par un traitement plasma oxygène.

L'utilisation d'une couche d'oxyde de lithium cobalt épaisse (i.e. plusieurs dizaines de microns) introduit une forte rugosité de surface et conduit à des courants de fuite importants. Les étapes B) et C) permettent de résoudre ce problème.

Toutefois, un tel procédé de l'état de la technique n'est pas entièrement satisfaisant dans la mesure où les étapes B) et C) peuvent être délicates à mettre en oeuvre. Les étapes B) et C) nécessitent un équipement dédié (e.g. une chambre de vide pour le plasma, §0038) et introduisent certaines difficultés (e.g. le polissage ajoute une couche de contaminants à la surface de la cathode, §0071). Les étapes B) et C) peuvent demander un temps d'opération important et des compétences spécifiques pour optimiser les paramètres de réglage (e.g. gaz à utiliser, durée du traitement plasma, densité du plasma, retrait de la couche de contaminants etc.).

L'homme du métier recherche donc à s'affranchir des étapes B) et C) tout en limitant les courants de fuite.

### Exposé de l'invention

L'invention vise à remédier en tout ou partie aux inconvénients précités. A cet effet, l'invention a pour objet un procédé de fabrication d'une microbatterie à électrolyte solide, comportant les étapes successives :
a) utiliser un empilement comprenant successivement un substrat initial et une couche d'oxyde de lithium cobalt ; la couche d'oxyde de lithium cobalt formant une cathode présentant des première et seconde surfaces opposées, la première surface étant orientée vers le substrat initial ; la couche d'oxyde de lithium cobalt possédant une taille de grain croissante de la première surface vers la seconde surface ;
b) assembler un substrat de transfert à la seconde surface de la cathode puis retourner l'empilement ;
c) retirer le substrat initial de manière à exposer la première surface de la cathode ;
d) former un électrolyte solide à base de lithium sur la première surface de la cathode ;
e) former une anode sur l'électrolyte solide.

Ainsi, un tel procédé selon l'invention permet, notamment grâce à l'étape b), d'obtenir une cristallographie favorable (i.e. grains de plus petite taille) à l'interface entre la première surface de la cathode et l'électrolyte, tout en s'affranchissant des étapes B) et C) de l'état de la technique. Les inventeurs ont constaté que la croissance d'une couche d'oxyde de lithium cobalt sur un substrat initial produit une taille de grain croissante de la première surface (orientée vers le substrat initial) vers la seconde surface opposée, la première surface présentant une rugosité faible tandis que la seconde surface présentant une rugosité importante. Les étapes b) et c) permettent d'obtenir une présence de grains de petite taille à l'interface entre la première surface de la cathode et l'électrolyte, et par là-même de limiter les courants de fuite.

Par ailleurs, la présence de grains de petite taille à l'interface entre la première surface de la cathode et l'électrolyte facilite ultérieurement la diffusion des ions lithium Li⁺, ce qui permet de réduire la résistance interne de la microbatterie.

Le procédé selon l'invention peut comporter une ou plusieurs des caractéristiques suivantes.

Selon une caractéristique de l'invention, l'étape a) est exécutée de sorte que la couche d'oxyde de lithium cobalt est une couche polycristalline.

Une couche polycristalline diffère d'une couche constituée d'un agglomérat de grains. Ainsi, il est possible avec une couche polycristalline d'oxyde de lithium cobalt d'obtenir une plus grande énergie disponible par unité de volume par rapport à une couche constituée de grains agglomérés.

Selon une caractéristique de l'invention, l'étape a) est exécutée de sorte que :
- la couche d'oxyde de lithium cobalt présente successivement des première et seconde zones respectivement orientées vers les première et seconde surfaces ;
- la première zone comporte majoritairement des grains équiaxes ;
- la seconde zone comporte majoritairement des grains colonnaires.

Comme évoqué précédemment, les inventeurs ont constaté que la croissance d'une couche d'oxyde de lithium cobalt sur un substrat initial produit une taille de grain croissante de la première zone vers la seconde zone, la première surface présentant une rugosité faible (grains équiaxes) tandis que la seconde surface présentant une rugosité importante (grains colonnaires).

Selon une caractéristique de l'invention, l'étape a) est exécutée de sorte que la première zone s'étend sur une épaisseur comprise entre 100 nm et 500 nm, de préférence comprise entre 200 nm et 400 nm.

Ainsi, un avantage procuré par une telle épaisseur est de faciliter ultérieurement la diffusion des ions lithium Li⁺, ce qui permet de réduire la résistance interne de la microbatterie.

Selon une caractéristique de l'invention, l'étape a) est exécutée de sorte que la première zone possède une taille de grain moyenne inférieure ou égale à 40 nm.

Ainsi, un avantage procuré par une telle taille de grain est de limiter significativement les courants de fuite.

Selon une caractéristique de l'invention, l'étape a) est exécutée de sorte que la couche d'oxyde de lithium cobalt s'étend sur une épaisseur comprise entre 1 µm et 200 µm, de préférence comprise entre 10 µm et 200 µm.

Ainsi, un avantage procuré par une telle épaisseur est d'obtenir une capacité de stockage importante pour la microbatterie.

Selon une caractéristique de l'invention, l'étape a) est exécutée de sorte que l'empilement comprend un collecteur de courant cathodique formé sur la seconde surface de la couche d'oxyde de lithium cobalt ; l'étape b) est exécutée de sorte que le substrat de transfert est assemblé au collecteur de courant cathodique.

En fonction des matériaux du substrat de transfert et du collecteur de courant cathodique, il peut être judicieux de former le collecteur de courant cathodique sur la seconde surface de la couche d'oxyde de lithium cobalt pour faciliter l'assemblage lors de l'étape b).

Selon une caractéristique de l'invention, l'étape b) est exécutée de sorte que le substrat de transfert comporte un collecteur de courant cathodique assemblé à la seconde surface de la cathode.

En fonction des matériaux du substrat de transfert et du collecteur de courant cathodique, il peut être judicieux de former préalablement le collecteur de courant cathodique sur le substrat de transfert pour faciliter l'assemblage de l'étape b).

Selon une caractéristique de l'invention, l'étape b) est exécutée de sorte que le substrat de transfert est réalisé dans un matériau électriquement conducteur de sorte que le substrat de transfert constitue un collecteur de courant cathodique.

Ainsi, un avantage procuré est de s'affranchir de la formation d'une couche dédiée pour assurer la fonction de collecteur de courant cathodique.

Selon une caractéristique de l'invention, l'étape a) est exécutée de sorte que l'empilement comporte une couche tampon, de préférence métallique, formée entre le substrat initial et la couche d'oxyde de lithium cobalt ; l'étape c) consistant à retirer le substrat initial et la couche tampon de manière à exposer la première surface de la cathode.

Ainsi, un avantage procuré par la couche tampon est d'assurer une bonne tenue mécanique de l'empilement, par exemple lorsque le substrat initial et la couche d'oxyde de lithium cobalt présentent des coefficients de dilatation thermique sensiblement différents. Par ailleurs, la couche tampon peut assurer une fonction d'arrêt pour le retrait du substrat initial lors de l'étape c) qui peut s'effectuer par meulage (« *grinding* » en langue anglaise) par exemple.

Selon une caractéristique de l'invention, le procédé comporte une étape f) consistant à former un collecteur de courant anodique électriquement connecté à l'anode, l'étape f) étant exécutée après l'étape e).

Le collecteur de courant anodique peut être formé sur l'anode. Toutefois, le collecteur de courant anodique peut être formé sur le substrat de transfert de manière à être électriquement connecté à l'anode et électriquement isolé de la cathode.

Selon une caractéristique de l'invention, l'étape a) comporte les étapes :
a₁) utiliser le substrat initial ;
a₂) former la couche d'oxyde de lithium cobalt sur le substrat initial selon une croissance adaptée pour que la couche d'oxyde de lithium cobalt possède une taille de grain croissante de la première surface vers la seconde surface ;
l'étape a₂) étant exécutée de sorte que la couche d'oxyde de lithium cobalt est formée sur la couche tampon en présence d'une couche tampon ;
l'étape a₂) étant exécutée par une technique choisie parmi une électrolyse, une pulvérisation cathodique, un dépôt chimique en phase vapeur.

Comme évoqué précédemment, les inventeurs ont constaté que la croissance d'une couche d'oxyde de lithium cobalt sur un substrat initial produit une taille de grain croissante de la première surface (orientée vers le substrat initial) vers la seconde surface opposée, la première surface présentant une rugosité faible tandis que la seconde surface présentant une rugosité importante.

L'invention a également pour objet une microbatterie à électrolyte solide, comportant :
- un substrat ;
- une couche d'oxyde de lithium cobalt, formant une cathode présentant des première et seconde surfaces opposées ;
- un électrolyte solide, à base de lithium, formé sur la première surface de la cathode ; la seconde surface de la cathode étant orientée vers le substrat ;
- une anode, formée sur l'électrolyte solide ;
caractérisée en ce que la couche d'oxyde de lithium cobalt possède une taille de grain croissante de la première surface vers la seconde surface.

Ainsi, une telle microbatterie selon l'invention possède des grains de petite taille à l'interface entre la première surface de la cathode et l'électrolyte, ce qui permet de limiter les courants de fuite. Par ailleurs, la présence de grains de petite taille à l'interface entre la première surface de la cathode et l'électrolyte facilite ultérieurement la diffusion des ions lithium Li⁺, ce qui permet de réduire la résistance interne de la microbatterie.

Selon une caractéristique de l'invention, la couche d'oxyde de lithium cobalt est une couche polycristalline.

Une couche polycristalline diffère d'une couche constituée d'un agglomérat de grains. Ainsi, il est possible avec une couche polycristalline d'oxyde de lithium cobalt d'obtenir une plus grande énergie disponible par unité de volume par rapport à une couche constituée de grains agglomérés.

Selon une caractéristique de l'invention :
- la couche d'oxyde de lithium cobalt présente successivement des première et seconde zones respectivement orientées vers les première et seconde surfaces ;
- la première zone comporte majoritairement des grains équiaxes ;
- la seconde zone comporte majoritairement des grains colonnaires.

Ainsi, la première surface présente une rugosité faible (grains équiaxes) tandis que la seconde surface présente une rugosité importante (grains colonnaires).

Selon une caractéristique de l'invention, la première zone possède une taille de grain moyenne inférieure ou égale à 40 nm.

Ainsi, un avantage procuré par une telle taille de grain est de limiter significativement les courants de fuite.

Selon une caractéristique de l'invention :
- la couche d'oxyde de lithium cobalt s'étend sur une épaisseur comprise entre 1 µm et 200 µm, de préférence comprise entre 10 µm et 200 µm ;
- la première zone s'étend sur une épaisseur comprise entre 100 nm et 500 nm, de préférence comprise entre 200 nm et 400 nm.

Ainsi, un avantage procuré par une telle épaisseur de la couche d'oxyde de lithium cobalt est d'obtenir une capacité de stockage importante pour la microbatterie. En outre, un avantage procuré par une telle épaisseur de la première zone est de faciliter ultérieurement la diffusion des ions lithium Li⁺, ce qui permet de réduire la résistance interne de la microbatterie.

### Définitions

- Par « microbatterie », on entend un accumulateur dit « tout solide », comportant un empilement formé de couches minces solides, l'empilement présentant généralement une épaisseur de l'ordre de la dizaine ou de la centaine de microns. Plus précisément, une microbatterie peut être définie comme une batterie présentant les caractéristiques suivantes :
   (i) toutes les couches actives (i.e. les électrodes et l'électrolyte) sont réalisées uniquement dans un matériau inorganique solide, excluant donc notamment des électrolytes liquides ou des électrolytes réalisés dans un polymère sous forme de gel, ainsi que des électrodes réalisées dans un matériau comportant des liants à base de polymères ;
   (ii) l'épaisseur individuelle des couches actives est inférieure à 500 µm, et l'épaisseur de l'électrolyte est généralement inférieure à 5 µm ;
   (iii) les dimensions surfaciques varient généralement entre 1 mm² et 10 cm².
- Par « substrat », on entend un support physique autoporté. Un substrat peut être une « tranche » (également dénommée « plaquette », « *wafer* » en langue anglaise) qui se présente généralement sous la forme d'un disque issu d'une découpe dans un lingot d'un matériau cristallin.
- Par « taille de grain », on entend une dimension caractéristique des particules (grains) d'oxyde de lithium cobalt, pouvant être obtenue par une analyse granulométrique (e.g. images de microscope électronique en transmission). La taille de grain peut correspondre à un diamètre équivalent, c'est-à-dire le diamètre de la sphère qui aurait un comportement identique ou équivalent à une particule donnée d'oxyde de lithium cobalt.
- Par « taille de grain moyenne », on entend une moyenne arithmétique des dimensions caractéristiques des particules d'oxyde de lithium cobalt.
- Par « majoritairement », on entend que plus de 50% des grains de la première zone sont équiaxes. De la même façon, on entend que plus de 50% des grains de la seconde zone sont colonnaires.
- Par « à base de », on entend que le lithium est un élément composant l'électrolyte solide. Le lithium n'est pas nécessairement l'élément principal et majoritaire composant l'électrolyte solide. L'électrolyte solide peut comporter du lithium Li, du phosphore P et de l'oxygène O, avec éventuellement de l'azote N et/ou du soufre S. L'oxygène O peut être l'élément majoritaire composant l'électrolyte solide.
- Par « grains équiaxes », on entend des grains présentant une croissance dépourvue d'une orientation cristallographique privilégiée (isotropes).
- Par « grains colonnaires », on entend des grains de forme allongée (également appelés dendrites) présentant une croissance possédant une orientation cristallographique privilégiée (anisotropes).
- Par « épaisseur », on entend une dimension suivant la hauteur de l'empilement, c'est-à-dire suivant la normale à la surface du substrat initial.
- Par « électriquement conducteur », on entend que le matériau du substrat de transfert présente une conductivité électrique à 300 K supérieure ou égale à 10² S/cm.
- Les valeurs X et Y, exprimées à l'aide des expressions « entre X et Y » ou « compris entre X et Y » sont incluses dans la plage de valeurs définie.

### Brève description des dessins

D'autres caractéristiques et avantages apparaîtront dans l'exposé détaillé de différents modes de réalisation de l'invention, l'exposé étant assorti d'exemples et de références aux dessins joints.
Figure 1 comporte des vues schématiques en coupe, représentant des étapes d'un procédé selon l'invention, et illustrant un mode de réalisation où le substrat de transfert constitue un collecteur de courant cathodique.
Figure 2 comporte des vues schématiques analogues à la figure 1, illustrant en outre un exemple d'exécution de l'étape f).
Figure 3 comporte des vues schématiques analogues à la figure 1, illustrant en outre la présence d'une couche tampon.
Figure 4 comporte des vues schématiques analogues à la figure 3, illustrant en outre la présence d'une couche d'oxyde revêtant le substrat initial, et sur laquelle est formée la couche tampon.
Figure 5 comporte des vues schématiques en coupe, représentant des étapes d'un procédé selon l'invention, et illustrant un mode de réalisation où un collecteur de courant cathodique est formé sur la seconde surface de la couche d'oxyde de lithium cobalt.
Figure 6 comporte des vues schématiques en coupe, représentant des étapes d'un procédé selon l'invention, et illustrant un mode de réalisation où le substrat de transfert comporte un collecteur de courant cathodique.
Figure 7 comporte des vues schématiques en coupe, représentant des étapes d'un procédé selon l'invention, et illustrant un mode de réalisation avec la présence d'une couche tampon, la présence d'une couche d'oxyde revêtant le substrat initial, et sur laquelle est formée la couche tampon, et où un collecteur de courant cathodique est formé sur la seconde surface de la couche d'oxyde de lithium cobalt.

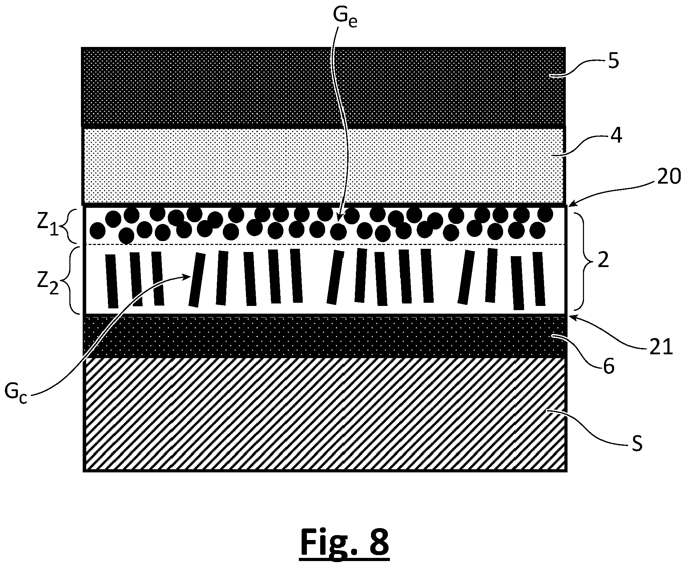

Figure 8 est une vue schématique en coupe, représentant partiellement (e.g. le collecteur de courant anodique n'est pas illustré) une microbatterie selon l'invention.

Il est à noter que les dessins décrits ci-avant sont schématiques, et ne sont pas nécessairement à l'échelle par souci de lisibilité et pour en simplifier leur compréhension. Les coupes sont effectuées selon la hauteur de l'empilement, autrement dit suivant la normale à la surface du substrat initial.

### Exposé détaillé des modes de réalisation

Les éléments identiques ou assurant la même fonction porteront les mêmes références pour les différents modes de réalisation, par souci de simplification.

### Procédé

Un objet de l'invention est un procédé de fabrication d'une microbatterie à électrolyte solide, comportant les étapes successives :
a) utiliser un empilement comprenant successivement un substrat initial 1 et une couche d'oxyde de lithium cobalt 2 ; la couche d'oxyde de lithium cobalt 2 formant une cathode présentant des première et seconde surfaces 20, 21 opposées, la première surface 20 étant orientée vers le substrat initial 1 ; la couche d'oxyde de lithium cobalt 2 possédant une taille de grain croissante de la première surface 20 vers la seconde surface 21 ;
b) assembler un substrat de transfert 3 à la seconde surface 21 de la cathode 2 puis retourner l'empilement ;
c) retirer le substrat initial 1 de manière à exposer la première surface 20 de la cathode 2 ;
d) former un électrolyte solide 4 à base de lithium sur la première surface 20 de la cathode 2 ;
e) former une anode 5 sur l'électrolyte solide 4.

### Etape a)

L'empilement utilisé lors de l'étape a) comprend successivement un substrat initial 1 et une couche d'oxyde de lithium cobalt 2 (LiCoO₂). La couche d'oxyde de lithium cobalt 2 présente des première et seconde surfaces 20, 21 opposées, la première surface 20 étant orientée vers le substrat initial 1. La couche d'oxyde de lithium cobalt 2 possède une taille de grain croissante de la première surface 20 vers la seconde surface 21.

L'étape a) est avantageusement exécutée de sorte que :
- la couche d'oxyde de lithium cobalt 2 présente successivement des première et seconde zones Z₁, Z₂ respectivement orientées vers les première et seconde surfaces 20, 21 de la cathode 2 ;
- la première zone Z₁ comporte majoritairement des grains équiaxes Gₑ ;
- la seconde zone Z₂ comporte majoritairement des grains colonnaires G_{c}.

L'étape a) est avantageusement exécutée de sorte que la première zone Z₁ s'étend sur une épaisseur comprise entre 100 nm et 500 nm, de préférence comprise entre 200 nm et 400 nm.

L'étape a) est avantageusement exécutée de sorte que la première zone Z₁ possède une taille de grain moyenne inférieure ou égale à 40 nm.

L'étape a) est avantageusement exécutée de sorte que la couche d'oxyde de lithium cobalt 2 s'étend sur une épaisseur comprise entre 1 µm et 200 µm, de préférence comprise entre 10 µm et 200 µm.

L'étape a) est avantageusement exécutée de sorte que la couche d'oxyde de lithium cobalt 2 est une couche polycristalline. Une couche polycristalline diffère d'une couche constituée d'un agglomérat de grains. Ainsi, il est possible avec une couche polycristalline d'oxyde de lithium cobalt d'obtenir une plus grande énergie disponible par unité de volume par rapport à une couche constituée de grains agglomérés.

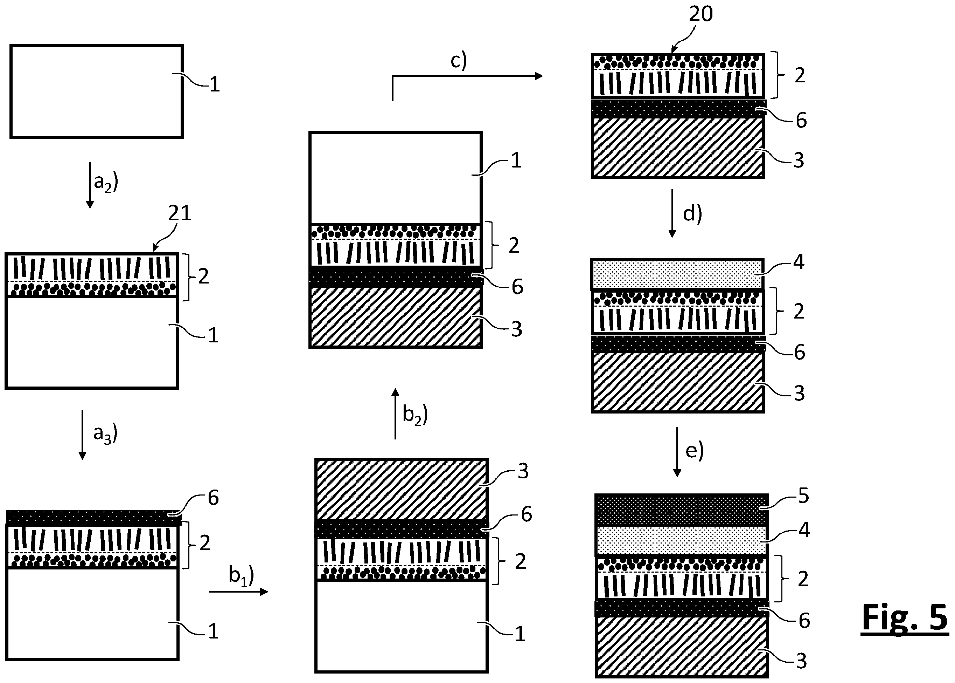

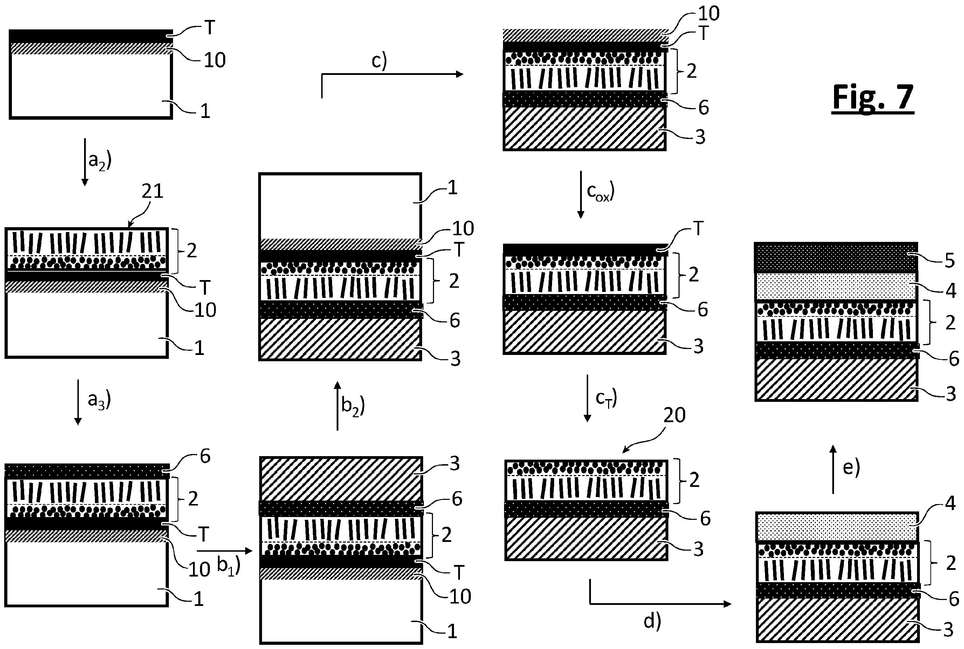

Selon un mode de réalisation illustré aux figures 5 et 7, l'étape a) est exécutée de sorte que l'empilement comprend un collecteur de courant cathodique 6 formé sur la seconde surface 21 de la couche d'oxyde de lithium cobalt 2. A titre d'exemple non limitatif, le collecteur de courant cathodique 6 peut être réalisé dans un alliage titane-cuivre TiCu. A titre de variante, le collecteur de courant cathodique 6 peut comporter une couche de titane Ti et une couche de cuivre Cu. La couche de titane Ti peut présenter une épaisseur de 500 nm. La couche de cuivre Cu peut présenter une épaisseur de 1 µm.

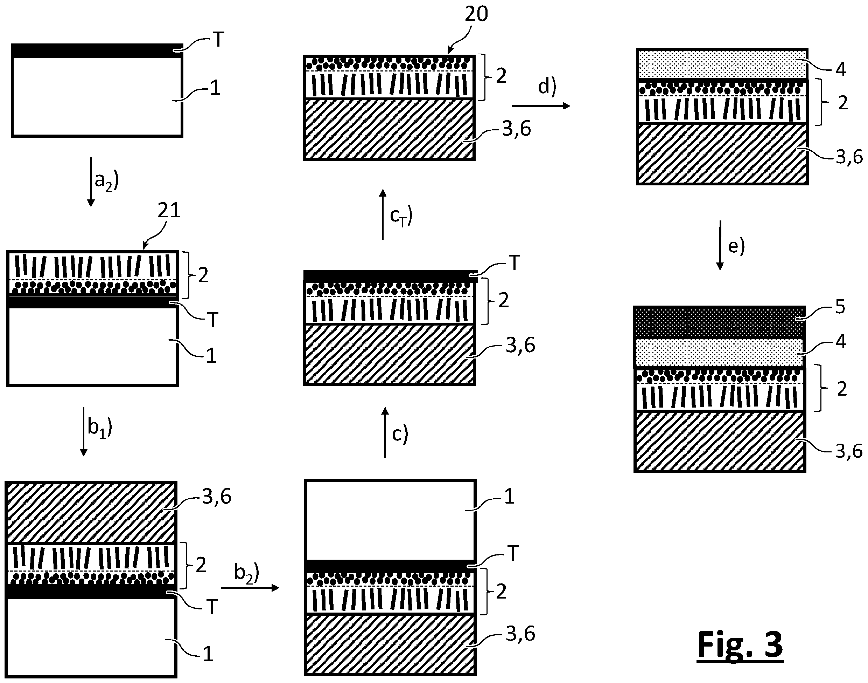

Comme illustré aux figures 3, 4 et 7, l'étape a) est avantageusement exécutée de sorte que l'empilement comporte une couche tampon T, de préférence métallique, formée entre le substrat initial 1 et la couche d'oxyde de lithium cobalt 2. A titre d'exemples non limitatifs, la couche tampon T peut être réalisée en titane Ti ou en platine Pt.

L'étape a) comporte avantageusement les étapes :
a₁) utiliser le substrat initial 1 ;
a₂) former la couche d'oxyde de lithium cobalt 2 sur le substrat initial 1 selon une croissance adaptée pour que la couche d'oxyde de lithium cobalt 2 possède une taille de grain croissante de la première surface 20 vers la seconde surface 21.

L'étape a₂) est exécutée de sorte que la couche d'oxyde de lithium cobalt 2 est formée sur la couche tampon T le cas échéant. L'étape a₂) est avantageusement exécutée par une technique choisie parmi une électrolyse, une pulvérisation cathodique, un dépôt chimique en phase vapeur.

L'électrolyse est un procédé électrochimique hydrothermique. Le bain précurseur peut être composé d'un sel de cobalt dans une solution concentrée d'hydroxyde de lithium, le solvant pouvant être de l'eau déminéralisée et désoxygénée. La température peut être contrôlée entre 150°C et 200°C. Les conditions de l'électrolyse peuvent s'effectuer à densité de courant constante. La couche d'oxyde de lithium cobalt 2 formée par électrolyse peut avoir une épaisseur importante, jusqu'à plusieurs centaines de µm.

La pulvérisation cathodique (« *sputtering* » en langue anglaise) est une technique (procédé froid) dans lequel des particules sont arrachées à une cathode (appelée « cible », réalisée en oxyde de lithium cobalt), puis recondensées sur le substrat initial 1 (ou sur la couche tampon T le cas échéant) dans une atmosphère raréfiée. Un plasma froid est créé entre la cible et le substrat initial 1. Sous l'effet d'un champ électrique, les espèces positives du plasma sont attirées par la cathode (cible) et entrent en collision avec celle-ci. Les espèces positives du plasma transmettent leur quantité de mouvement et provoquent la pulvérisation des atomes de la cible sous forme de particules neutres qui se condensent sur le substrat initial 1. La formation du film s'effectue selon plusieurs mécanismes qui dépendent des forces d'interaction entre le substrat initial 1 et le film. A titre d'exemple non limitatif, en présence d'une couche tampon T en platine formée sur le substrat initial 1, la pulvérisation cathodique peut être exécutée à une température comprise entre 50°C et 60°C, selon une puissance de 200 W, avec une tension de polarisation de l'ordre de -50 V.

Le dépôt chimique en phase vapeur (CVD pour « *Chemical Vapor Déposition* » en langue anglaise) peut conduire à exposer le substrat initial 1 à un ou plusieurs précurseurs en phase gazeuse qui réagissent et/ou se décomposent à la surface du substrat initial 1 pour générer le dépôt désiré. Les précurseurs utilisés pour former de l'oxyde de lithium cobalt peuvent être le (cyclopentadiényl)cobalt dicarbonyle CpCo(CO)₂ et le tert-butyllithium t-BuLi. Le dépôt CVD peut s'effectuer à une température de l'ordre de 500°C.

Selon un mode de réalisation illustré aux figures 5 et 7, l'étape a) peut comporter une étape a₃) consistant à former un collecteur de courant cathodique 6 sur la seconde surface 21 de la couche d'oxyde de lithium cobalt 2. L'étape a₃) est exécutée après l'étape a₂).

L'étape a) est avantageusement exécutée de sorte que le substrat initial 1 est choisi parmi :
- un substrat de verre,
- un substrat de silicium revêtu d'une couche de dioxyde de silicium 10.

### Etape b)

L'étape b) consiste à assembler un substrat de transfert 3 à la seconde surface 21 de la cathode puis retourner l'empilement. L'étape b) comporte les étapes :
b₁) assembler un substrat de transfert 3 à la seconde surface 21 de la cathode 2 ;
b₂) retourner l'empilement de sorte que l'empilement repose sur le substrat de transfert 3.

Comme illustré aux figures 5 et 7, lorsque l'étape a) est exécutée de sorte que l'empilement comprend un collecteur de courant cathodique 6 formé sur la seconde surface 21 de la couche d'oxyde de lithium cobalt 2, l'étape b) est exécutée de sorte que le substrat de transfert 3 est assemblé au collecteur de courant cathodique 6. Plus précisément, l'étape b₁) est exécutée de sorte que le substrat de transfert 3 est assemblé au collecteur de courant cathodique 6.

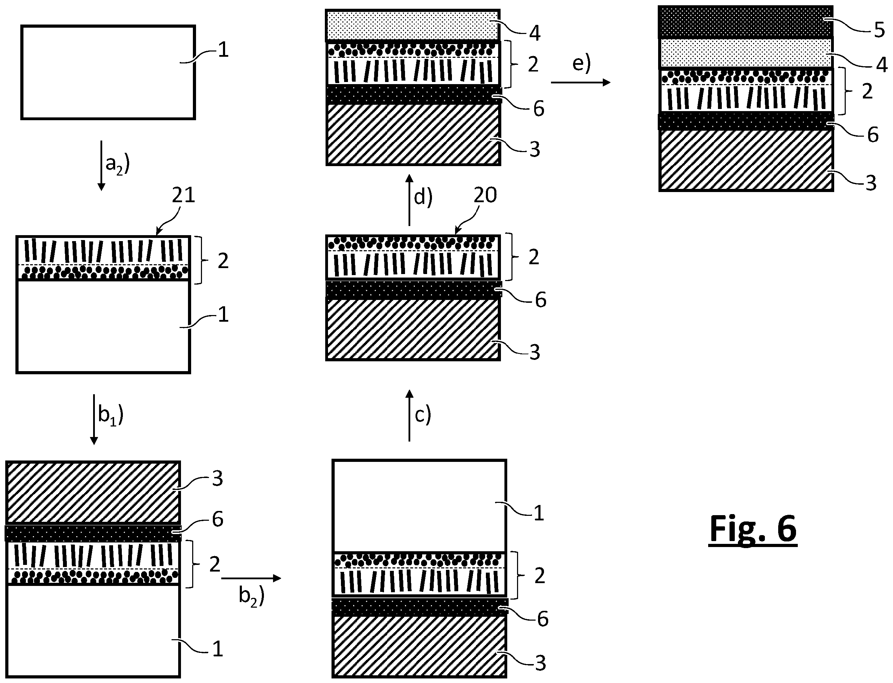

Selon une variante de réalisation illustrée à la figure 6, l'étape b) est exécutée de sorte que le substrat de transfert 3 comporte un collecteur de courant cathodique 6 assemblé à la seconde surface 21 de la cathode 2. En d'autres termes, le substrat de transfert 3 peut être revêtu du collecteur de courant cathodique 6. A titre d'exemple non limitatif, le collecteur de courant cathodique 6 peut être réalisé dans un alliage titane-cuivre Ti-Cu ou un alliage titane-or Ti-Au. A titre de variante, le collecteur de courant cathodique 6 peut comporter une couche de titane Ti et une couche de cuivre Cu. La couche de titane Ti peut présenter une épaisseur comprise entre 20 nm et 500 nm. La couche de cuivre Cu peut présenter une épaisseur comprise entre 500 nm et 2 µm. A titre de variante, le collecteur de courant cathodique 6 peut comporter une couche de titane Ti et une couche d'or Au. La couche de titane Ti peut présenter une épaisseur comprise entre 20 nm et 500 nm. La couche d'or Au peut présenter une épaisseur comprise entre 200 nm et 500 nm.

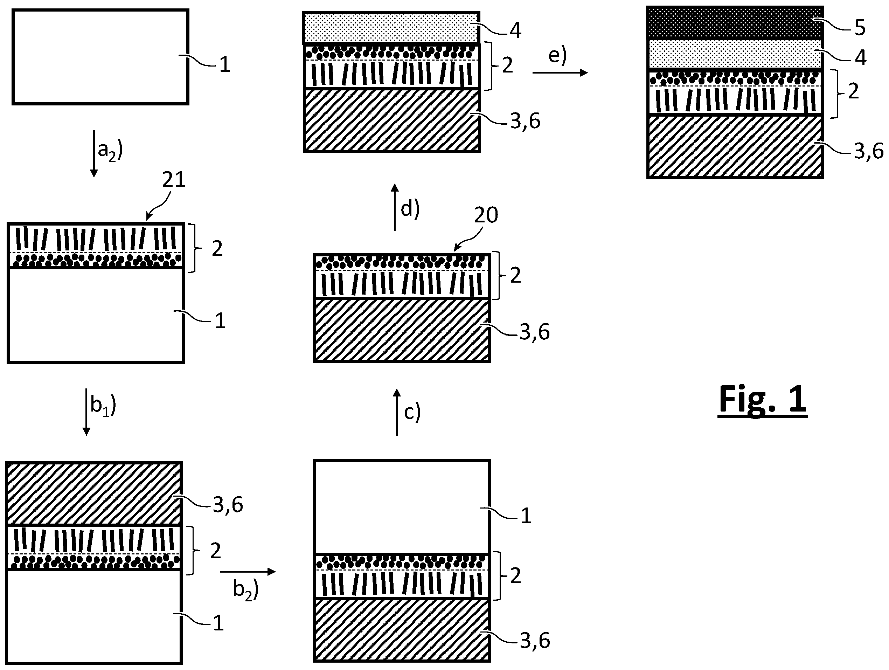

Selon une autre variante de réalisation illustrée aux figures 1 à 4, l'étape b) est exécutée de sorte que le substrat de transfert 3 est réalisé dans un matériau électriquement conducteur de sorte que le substrat de transfert 3 constitue un collecteur de courant cathodique 6. A titre d'exemples non limitatifs, le matériau électriquement conducteur peut être un matériau métallique (e.g. cuivre, aluminium) ou un polymère tel que la polyanifine ou le polyacrylate. En raison de la forte rugosité de la seconde surface 21 de la cathode 2 et de la différence de coefficients de dilatation thermique entre la cathode 2 et le substrat de transfert 3 électriquement conducteur, l'assemblage de l'étape b₁) ne peut être généralement pas être exécuté par un collage direct. Ainsi, il est possible de prévoir une interface entre la seconde surface 21 de la cathode 2 et le substrat de transfert 3 électriquement conducteur. A titre d'exemples non limitatifs, il est possible d'utiliser comme interface :
(i) des plots électriquement conducteurs du côté du substrat de transfert 3, tels que des billes de brasure (e.g. réalisées dans un alliage Sn-Ag avec un diamètre d'au moins 100 µm) ou des plots d'or (« *Gold Stud Bump* » en langue anglaise) avec un diamètre d'au moins 100 µm, les plots électriquement conducteurs pouvant étant séparés par un polymère tel qu'une pâte non électriquement conductrice (NCP pour « *Non conductive Paste* » en langue anglaise) ; et
(ii) une couche métallique (e.g. en alliage Ti-Au) fine (e.g. avec une épaisseur comprise entre 20 nm et 100 nm) du côté de la seconde surface 21 de la cathode 2.

La couche métallique de l'interface permet d'obtenir la mouillabilité de la seconde surface 21 de la cathode 2. Les plots électriquement conducteurs en or autorisent un assemblage à froid ou à basse température (100°C - 150°C) tandis que les billes de brasure autorisent un assemblage à une température de l'ordre de 250°C.

Selon un mode de réalisation, l'étape b) est exécutée de sorte que le substrat de transfert 3 est réalisé dans un polymère durci. Lorsque le polymère durci est diélectrique (e.g. une résine époxy, le polyimide, un polybenzoxazole PBO), le procédé comporte avantageusement une étape consistant à former des pistes électriquement conductrices au sein du polymère durci, par exemple par forage laser (« *laser drilling* » en langue anglaise).

A titre d'exemple non limitatif, le substrat de transfert 3 peut présenter une épaisseur comprise entre 200 µm et 1 mm.

A titre d'exemples non limitatifs, l'étape b) peut être exécutée par un collage eutectique, par une brasure, par une laque conductrice (type sérigraphie) ou à l'aide d'une colle (e.g. époxy) selon la nature des matériaux du substrat de transfert 3 et du collecteur de courant cathodique 6. Le collage eutectique et la brasure nécessitent la formation d'une couche métallique (e.g. deux sous-couches Ti/Cu ou Ti/Au) à la seconde surface 21 de la cathode 2.

### Etape c)

L'étape c) consiste à retirer le substrat initial 1 de manière à exposer la première surface 20 de la cathode 2.

Lorsque l'étape a) est exécutée de sorte que l'empilement comporte une couche tampon T, de préférence métallique, formée entre le substrat initial 1 et la couche d'oxyde de lithium cobalt 2, alors l'étape c) consiste à retirer le substrat initial 1 et la couche tampon T de manière à exposer la première surface 20 de la cathode 2. En d'autres termes, l'étape c) comporte une étape c_{T}) consistant à retirer la couche tampon T de manière à exposer la première surface 20 de la cathode 2.

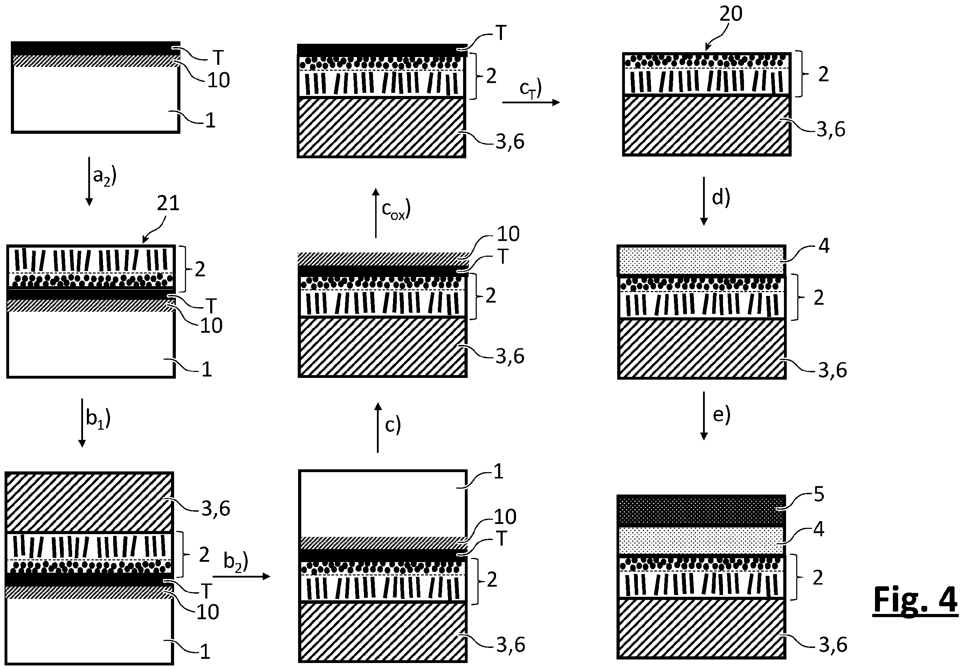

Comme illustré aux figures 4 et 7, lorsque le substrat initial 1 est un substrat de silicium revêtu d'une couche de dioxyde de silicium 10, le substrat de silicium peut être retiré par une étape de meulage (« *grinding* » en langue anglaise, on parle également de rectification mécanique) suivie d'une étape de gravure (sèche ou humide) du silicium restant, la couche de dioxyde de silicium 10 agissant comme une couche d'arrêt. Le substrat de silicium est dans un premier temps aminci par rectification mécanique jusqu'à atteindre une épaisseur de quelques dizaines de µm. L'empilement peut être aspiré sur un plateau de maintien (« *chuck* » en langue anglaise) en céramique poreuse, puis transféré sous une roue de meulage. La roue de meulage comporte un ensemble de dents disposées sur le pourtour d'une embase métallique contenant des grains de diamant synthétiques de tailles adaptées au matériau, d'un liant résine ou autre, et d'une porosité contrôlée. La roue de meulage et le plateau de maintien sont alors mis en rotation et la roue de meulage descend de manière à amincir le substrat initial 1 jusqu'à conserver une épaisseur comprise entre 10 µm et 100 µm, de préférence 50 µm. Cette épaisseur restante sera ensuite retirée par gravure sèche ou humide jusqu'à la couche de dioxyde de silicium 10. La vitesse de rotation de la roue de meulage (variant dans une gamme de 0 à 3000 tours/minute), la vitesse de descente de la roue de meulage (variant dans une gamme de 0,01 à 50 µm/s) et la vitesse de rotation du plateau de maintien (variant de 0 à 300 tours/minute) sont adaptées en fonction des matériaux et des épaisseurs à retirer. La rectification mécanique peut impliquer un enchaînement de plusieurs vitesses de descente ainsi qu'un enchaînement de plusieurs roues de meulage. A titre d'exemple non limitatif, la rectification mécanique peut être effectuée à l'aide d'une machine Disco DAG 810 avec une roue de meulage de la série Disco GF01. La vitesse de rotation de la roue de meulage peut être de l'ordre de 2000 tours/minute. La vitesse de descente de la roue de meulage peut être de l'ordre de 1,5 µm/s. La vitesse de rotation du plateau de maintien peut être de l'ordre de 300 tours/minute.

Puis la couche de dioxyde de silicium 10 peut être retirée par gravure -étape cₒₓ)-, la couche tampon T agissant comme une couche d'arrêt. Enfin, la couche tampon T peut être retirée par gravure -étape c_{T})-, la cathode 2 agissant comme une couche d'arrêt.

### Etape d)

L'étape d) consiste à former un électrolyte solide 4 à base de lithium sur la première surface 20 de la cathode 2.

L'étape d) est avantageusement exécutée de sorte que l'électrolyte solide 4 est réalisé dans un matériau du type conducteur ionique solide, de préférence un oxynitrure de phosphore de lithium LiₓPO_{y}N_{z}.

L'électrolyte solide 4 peut présenter une épaisseur comprise entre 100 nm et 4 µm.

### Etape e)

L'étape e) consiste à former une anode 5 sur l'électrolyte solide 4. L'anode 5 est de préférence réalisée dans un matériau métallique choisi parmi le titane Ti, le cuivre Cu, le lithium Li, l'aluminium Al, le platine Pt, un acier inoxydable.

L'anode 5 peut présenter une épaisseur comprise entre 500 nm et 20 µm.

### Etape f)

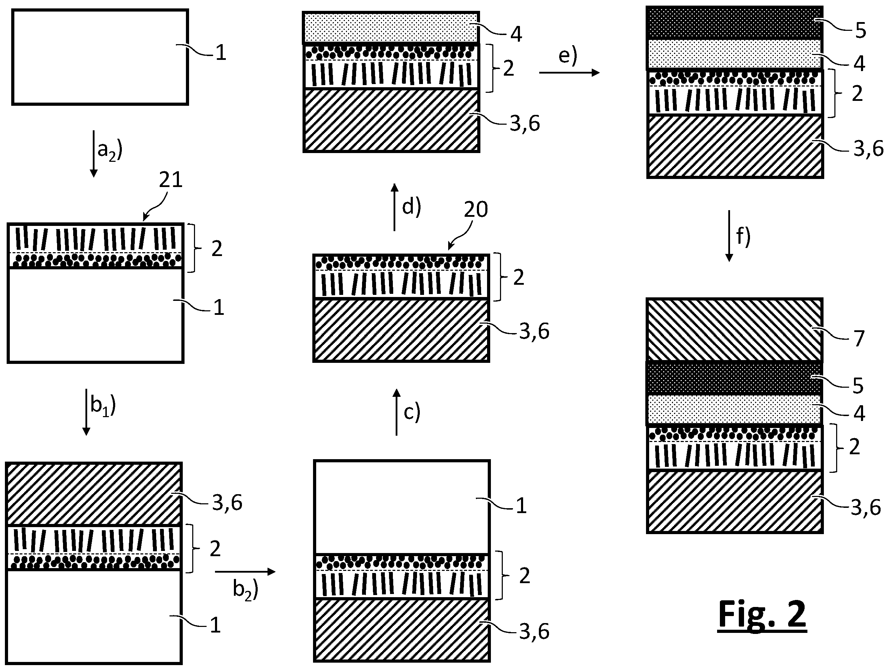

Comme illustré à la figure 2, le procédé comporte avantageusement une étape f) consistant à former un collecteur de courant anodique 7 électriquement connecté à l'anode 5. Le collecteur de courant anodique 7 peut être formé sur l'anode 5. L'étape f) est alors exécutée après l'étape e). Toutefois, le collecteur de courant anodique 7 peut être formé sur le substrat de transfert 3 de manière à être électriquement connecté à l'anode 5 et électriquement isolé de la cathode 2.

A titre d'exemple non limitatif, le collecteur de courant anodique 7 peut être réalisé dans un alliage titane-cuivre Ti-Cu ou un alliage titane-or Ti-Au. A titre de variante, le collecteur de courant anodique 7 peut comporter une couche de titane Ti et une couche de cuivre Cu. La couche de titane Ti peut présenter une épaisseur comprise entre 20 nm et 500 nm. La couche de cuivre Cu peut présenter une épaisseur comprise entre 500 nm et 2 µm. A titre de variante, le collecteur de courant anodique 7 peut comporter une couche de titane Ti et une couche d'or Au. La couche de titane Ti peut présenter une épaisseur comprise entre 20 nm et 500 nm. La couche d'or Au peut présenter une épaisseur comprise entre 200 nm et 500 nm.

### M icrobatterie

Un objet de l'invention est une microbatterie à électrolyte solide, comportant :
- un substrat S ;
- une couche d'oxyde de lithium cobalt 2, formant une cathode présentant des première et seconde surfaces 20, 21 opposées ;
- un électrolyte solide 4, à base de lithium, formé sur la première surface 20 de la cathode 2 ; la seconde surface 21 de la cathode étant orientée vers le substrat S ;
- une anode 5, formée sur l'électrolyte solide 4 ;
remarquable en ce que la couche d'oxyde de lithium cobalt 2 possède une taille de grain croissante de la première surface 20 vers la seconde surface 21.

### Substrat

A titre d'exemples non limitatifs, le substrat S peut être réalisé dans :
- un polymère durci diélectrique comportant des pistes électriquement conductrices ;
- un matériau métallique ;
- un matériau semi-conducteur ;
- un verre ou une céramique.

Le substrat S peut être temporaire ou permanent.

### Cathode

La couche d'oxyde de lithium cobalt 2 (LiCoOz) présente des première et seconde surfaces 20, 21 opposées, la seconde surface 21 étant orientée vers le substrat S. La couche d'oxyde de lithium cobalt 2 possède une taille de grain croissante de la première surface 20 vers la seconde surface 21.

Selon un mode de réalisation, la couche d'oxyde de lithium cobalt 2 présente successivement des première et seconde zones Z₁, Z₂ respectivement orientées vers les première et seconde surfaces 20, 21 de la cathode 2. La première zone Z₁ comporte majoritairement des grains équiaxes Gₑ. La seconde zone Z₂ comporte majoritairement des grains colonnaires G_{c}.

La première zone Z₁ possède avantageusement une taille de grain moyenne inférieure ou égale à 40 nm. La première zone Z₁ s'étend avantageusement sur une épaisseur comprise entre 100 nm et 500 nm, de préférence comprise entre 200 nm et 400 nm.

La couche d'oxyde de lithium cobalt 2 s'étend avantageusement sur une épaisseur comprise entre 1 µm et 200 µm, de préférence comprise entre 10 µm et 200 µm.

La couche d'oxyde de lithium cobalt 2 est avantageusement une couche polycristalline. Une couche polycristalline diffère d'une couche constituée d'un agglomérat de grains. Ainsi, il est possible avec une couche polycristalline d'oxyde de lithium cobalt d'obtenir une plus grande énergie disponible par unité de volume par rapport à une couche constituée de grains agglomérés.

### Electrolyte solide

L'électrolyte solide 4 est à base de lithium. L'électrolyte solide 4 est formé sur la première surface 20 de la cathode 2.

L'électrolyte solide 4 est avantageusement réalisé dans un matériau du type conducteur ionique solide, de préférence un oxynitrure de phosphore de lithium LiₓPO_{y}N_{z}.

L'électrolyte solide 4 peut présenter une épaisseur comprise entre 100 nm et 4 µm.

### Anode

L'anode 5 est formée sur l'électrolyte solide 4.

L'anode 5 est de préférence réalisée dans un matériau métallique choisi parmi le titane Ti, le cuivre Cu, le lithium Li, l'aluminium Al, le platine Pt, un acier inoxydable.

L'anode 5 peut présenter une épaisseur comprise entre 500 nm et 20 µm.

### Collecteurs de courant

La microbatterie peut comporter un collecteur de courant cathodique 6 électriquement connecté à la cathode 2. Le collecteur de courant cathodique 6 peut être constitué par le substrat S. A titre de variante, le collecteur de courant cathodique 6 peut être formé entre le substrat S et la cathode 2. A titre d'exemple non limitatif, le collecteur de courant cathodique 6 peut être réalisé dans un alliage titane-cuivre Ti-Cu ou un alliage titane-or Ti-Au. A titre de variante, le collecteur de courant cathodique 6 peut comporter une couche de titane Ti et une couche de cuivre Cu. La couche de titane Ti peut présenter une épaisseur comprise entre 20 nm et 500 nm. La couche de cuivre Cu peut présenter une épaisseur comprise entre 500 nm et 2 µm. A titre de variante, le collecteur de courant cathodique 6 peut comporter une couche de titane Ti et une couche d'or Au. La couche de titane Ti peut présenter une épaisseur comprise entre 20 nm et 500 nm. La couche d'or Au peut présenter une épaisseur comprise entre 200 nm et 500 nm.

La microbatterie peut comporter un collecteur de courant anodique 7 électriquement connecté à l'anode 5. Le collecteur de courant anodique 7 peut être formé sur l'anode 5. Toutefois, le collecteur de courant anodique 7 peut être formé sur le substrat S de manière à être électriquement connecté à l'anode 5 et électriquement isolé de la cathode 2. A titre d'exemple non limitatif, le collecteur de courant anodique 7 peut être réalisé dans un alliage titane-cuivre Ti-Cu ou un alliage titane-or Ti-Au. A titre de variante, le collecteur de courant anodique 7 peut comporter une couche de titane Ti et une couche de cuivre Cu. La couche de titane Ti peut présenter une épaisseur comprise entre 20 nm et 500 nm. La couche de cuivre Cu peut présenter une épaisseur comprise entre 500 nm et 2 µm. A titre de variante, le collecteur de courant anodique 7 peut comporter une couche de titane Ti et une couche d'or Au. La couche de titane Ti peut présenter une épaisseur comprise entre 20 nm et 500 nm. La couche d'or Au peut présenter une épaisseur comprise entre 200 nm et 500 nm.

L'invention ne se limite pas aux modes de réalisation exposés. L'homme du métier est mis à même de considérer leurs combinaisons techniquement opérantes, et de leur substituer des équivalents.

## Revendications

1. Procédé de fabrication d'une microbatterie à électrolyte solide, comportant les étapes successives :
a) utiliser un empilement comprenant successivement un substrat initial (1) et une couche d'oxyde de lithium cobalt (2) ; la couche d'oxyde de lithium cobalt (2) formant une cathode présentant des première et seconde surfaces (20, 21) opposées, la première surface (20) étant orientée vers le substrat initial (1) ; la couche d'oxyde de lithium cobalt (2) possédant une taille de grain croissante de la première surface (20) vers la seconde surface (21) ; la couche d'oxyde de lithium cobalt (2) présente successivement des première et seconde zones (Z₁, Z₂) respectivement orientées vers les première et seconde surfaces (20, 21) ; la première zone (Z₁) comporte majoritairement des grains équiaxes (Gₑ) ; la seconde zone (Z₂) comporte majoritairement des grains colonnaires (G_{c}) ; la première zone (Z₁) possède une taille de grain moyenne inférieure ou égale à 40 nm, la taille de grain étant une dimension caractéristique des particules d'oxyde de lithium cobalt obtenue par une analyse granulométrique ;
b) assembler un substrat de transfert (3) à la seconde surface (21) de la cathode (2) puis retourner l'empilement ;
c) retirer le substrat initial (1) de manière à exposer la première surface (20) de la cathode (2) ;
d) former un électrolyte solide (4) à base de lithium sur la première surface (20) de la cathode (2) ;
e) former une anode (5) sur l'électrolyte solide (4).

2. Procédé selon la revendication 1, dans lequel l'étape a) est exécutée de sorte que la couche d'oxyde de lithium cobalt (2) est une couche polycristalline.

3. Procédé selon la revendication 1 ou 2, dans lequel l'étape a) est exécutée de sorte que la première zone (Z₁) s'étend sur une épaisseur comprise entre 100 nm et 500 nm, de préférence comprise entre 200 nm et 400 nm.

4. Procédé selon l'une des revendications 1 à 3, dans lequel l'étape a) est exécutée de sorte que la couche d'oxyde de lithium cobalt (2) s'étend sur une épaisseur comprise entre 1 µm et 200 µm, de préférence comprise entre 10 µm et 200 µm.

5. Procédé selon l'une des revendications 1 à 4, dans lequel l'étape a) est exécutée de sorte que l'empilement comprend un collecteur de courant cathodique (6) formé sur la seconde surface (21) de la couche d'oxyde de lithium cobalt (2) ; l'étape b) est exécutée de sorte que le substrat de transfert (3) est assemblé au collecteur de courant cathodique (6).

6. Procédé selon l'une des revendications 1 à 4, dans lequel l'étape b) est exécutée de sorte que le substrat de transfert (3) comporte un collecteur de courant cathodique (6) assemblé à la seconde surface (21) de la cathode (2).

7. Procédé selon l'une des revendications 1 à 4, dans lequel l'étape b) est exécutée de sorte que le substrat de transfert (3) est réalisé dans un matériau électriquement conducteur de sorte que le substrat de transfert (3) constitue un collecteur de courant cathodique (6).

8. Procédé selon l'une des revendications 1 à 7, dans lequel l'étape a) est exécutée de sorte que l'empilement comporte une couche tampon (T), de préférence métallique, formée entre le substrat initial (1) et la couche d'oxyde de lithium cobalt (2) ; l'étape c) consistant à retirer le substrat initial (1) et la couche tampon (T) de manière à exposer la première surface (20) de la cathode (2).

9. Procédé selon l'une des revendications 1 à 8, comportant une étape f) consistant à former un collecteur de courant anodique (7) électriquement connecté à l'anode (5), l'étape f) étant exécutée après l'étape e).

10. Procédé selon l'une des revendications 1 à 9, dans lequel l'étape a) comporte les étapes :
a₁) utiliser le substrat initial (1) ;
a₂) former la couche d'oxyde de lithium cobalt (2) sur le substrat initial (1) selon une croissance adaptée pour que la couche d'oxyde de lithium cobalt (2) possède une taille de grain croissante de la première surface (20) vers la seconde surface (21) ;
l'étape a₂) étant exécutée de sorte que la couche d'oxyde de lithium cobalt (2) est formée sur la couche tampon (T) lorsque la revendication 10 dépend de la revendication 8 ;
l'étape a₂) étant exécutée par une technique choisie parmi une électrolyse, une pulvérisation cathodique, un dépôt chimique en phase vapeur.

11. Microbatterie à électrolyte solide, comportant :
- un substrat (S) ;
- une couche d'oxyde de lithium cobalt (2), formant une cathode présentant des première et seconde surfaces (20, 21) opposées ; la couche d'oxyde de lithium cobalt (2) présente successivement des première et seconde zones (Z₁, Z₂) respectivement orientées vers les première et seconde surfaces (20, 21) ; la première zone (Z₁) comporte majoritairement des grains équiaxes (Gₑ) ; la seconde zone (Z₂) comporte majoritairement des grains colonnaires (G_{c}) ; la première zone (Z₁) possède une taille de grain moyenne inférieure ou égale à 40 nm, la taille de grain étant une dimension caractéristique des particules d'oxyde de lithium cobalt obtenue par une analyse granulométrique ;
- un électrolyte solide (4), à base de lithium, formé sur la première surface (20) de la cathode (2) ; la seconde surface (21) de la cathode (2) étant orientée vers le substrat (S) ;
- une anode (5), formée sur l'électrolyte solide (4) ;
dans laquelle la couche d'oxyde de lithium cobalt (2) possède une taille de grain croissante de la première surface (20) vers la seconde surface (21).

12. Microbatterie selon la revendication 11, dans laquelle la couche d'oxyde de lithium cobalt (2) est une couche polycristalline.

13. Microbatterie selon la revendication 11 ou 12, dans laquelle :
- la couche d'oxyde de lithium cobalt (2) s'étend sur une épaisseur comprise entre 1 µm et 200 µm, de préférence comprise entre 10 µm et 200 µm ;
- la première zone (Z₁) s'étend sur une épaisseur comprise entre 100 nm et 500 nm, de préférence comprise entre 200 nm et 400 nm.
